# EUROPÄISCHE PATENTSCHRIFT

(11) **EP 0 797 039 B1**
(45) Veröffentlichungstag und Bekanntmachung des Hinweises auf die Patenterteilung: **16.10.2002**
(21) Anmeldenummer: 96120242.1
(22) Anmeldetag: 17.12.1996
(51) Int. Cl.: F16L 27/11, F16L 11/15, F16L 27/111, F16L 51/02

(54) **Leitungselement mit einem Balg aus Metall**
Pipe member having a metal bellows
Elément de tuyau avec soufflet métallique

(30) Priorität: 20.03.1996 DE 19610910; 11.10.1996 DE 19641963
(43) Veröffentlichungstag der Anmeldung: 24.09.1997
(73) Patentinhaber: Witzenmann GmbH, 75175 Pforzheim (DE)
(72) Erfinder: Elsässer, Fabian, 75334 Straubenhardt (DE); Krawietz, Tom, 75217 Birkenfeld (DE)
(74) Vertreter: Blumenröhr, Dietrich

(56) Entgegenhaltungen:
- EP-A- 0 282 689
- EP-A- 0 432 436
- EP-A- 0 436 772
- EP-A- 0 441 625
- DE-A- 2 651 662
- DE-A- 2 655 091
- US-A- 4 854 416

## Beschreibung

Die Erfindung betrifft ein Leitungselement, insbesondere für Abgas- und Abgasrückführleitungen von Verbrennungsmotoren bei Kraftfahrzeugen, mit einem mit zylindrischen Anschlußenden versehenen Leitungsteil aus Metall, das wenigstens einen mit zylindrischen Anschlußenden versehenen, schraubengangförmig oder ringgewellten flexiblen Balg enthält, und einem darin koaxial angeordneten Geflechtsschlauch oder Gestrickeschlauch aus Metalldraht, wobei Leitungsteil und Schlauch verbunden sind, der Außendurchmesser des Schlauches im wesentlichen dem freien Innendurchmessers des Leitungsteiles entspricht und an einer weiteren Stelle der Längserstreckung des Schlauches dessen Drähte über den Schlauchumfang bleibend gegenseitig festgelegt sind.

Ein solches Leitungselement ist z.B. aus der EP-A-0 436 772 bekannt.

Nachfolgend wird für den Geflechtsschlauch oder den Gestrickeschlauch im wesentlichen nur der Begriff "Schlauch" verwendet, um damit eine Vereinfachung vorzunehmen, wobei aber dem Geflechtsschlauch ein Vorzug eingeräumt werden soll.

Bei derartigen Leitungselementen werden die Bälge vielfach auch als Wellschläuche bezeichnet und sind entweder absolut dicht aus einem Rohr oder praktisch dicht durch schraubengangförmiges Wickeln eines vorprofilierten Metallbandes hergestellt. Die Leitungselemente dienen der absolut oder praktisch fluiddichten, insbesondere gasdichten flexiblen Verbindung zweier beidseitig anschließender Leitungen, im bevorzugten Falle der flexiblen Verbindung innerhalb der Abgasleitung eines Kraftfahrzeuges, wo die Leitungselemente die Aufgabe haben, Bewegungen insbesondere des Motors zuzulassen und die Motorschwingungen vom Fahrgastraum abzukoppeln.

Dabei kann das Leitungsteil und insbesondere der Balg je nach erforderlicher Flexibilität ein- oder mehrwandig ausgebildet sein, wobei bei mehrwandiger Ausbildung auch die einzelnen Wandlagen beispielsweise im Hinblick auf Korrosionsbelastungen aus unterschiedlichen Materialien bestehen können. Hinsichtlich des Querschnittes des Leitungsteiles kommen nicht nur kreisrunde Bauformen in Frage, sondern insbesondere auch ovale Bauformen, wenn dies beispielsweise aus Platzgründen wünschenswert ist.

Bei dem Leitungselement der eingangs genannten Art dient der im Inneren angeordnete und mit einem Ende am zugeordneten Ende des Leitungsteiles festgelegte Schlauch dazu, den Abgasstrom innerhalb des Balges zu führen, um auf diese Weise Wirbelbildungen an den Innenkrempen der Balgwellen und damit die Entstehung von Strömungsgeräuschen bzw. Sekundärschall zu verhindern. Gleichzeitig werden auf diese Weise die Innenkrempen der Balgwellen thermisch weniger beansprucht, was zu einer Lebensdauererhöhung des Balges führt.

Im bekannten Falle sitzt nun aber der Schlauch mit Ausnahme seiner Befestigung an einem Ende lose bzw. schlaff innerhalb des Leitungselementes, so daß er nicht in der Lage ist, über das vorstehend Gesagte hinausgehende Funktionen zu übernehmen. Insbesondere vermag er nicht, unmittelbar auf Schwingungen des Balges und damit des Leitungsteiles selbst Einfluß zu nehmen, die in der Weitergabe von Schwingungen zwischen den anschließenden Leitungen sowie dem Resonanzschwingungsverhalten des Balges bzw. des Leitungselementes bestehen. Derartige Schwingungen führen zu akustischen Begleiterscheinungen, die insbesondere von Seiten des Fahrgastraumes als unangenehm empfunden werden.

Aufgabe der Erfindung ist es daher, ein Leitungselement der eingangs genannten Art derart weiterzubilden, daß ohne Behinderung der Beweglichkeit des Leitungsteiles und grundsätzlich ohne zusätzliche Bauteile und einer damit einhergehenden Gewichtsvermehrung das Schwingungsverhalten des Balges und damit des Leitungsteiles im Sinne einer Verringerung der akustischen Begleiterscheinungen und einer Erhöhung der Lebensdauer verbessert wird.

Diese Aufgabe ist erfindungsgemäß dadurch gelöst, daß der Schlauch, der mit dem Leitungsteil nur an einem gemeinsansen Ende Verbunden ist, durch eine auf ihn im Sinne einer radialen Aufweitung wirkende Spreizkraft wenigstens an einer Stelle in reibende Anlage gegen die den freien Innendurchmesser des Leitungsteiles bildenden Wandungen des Leitungsteiles gebracht ist.

Dabei kann nach einer allgemein üblichen Bauform das Leitungsteil überhaupt bzw. ausschließlich durch einen Balg mit den genannten Anschlußenden gebildet sein. Es kann jedoch je nach den Umständen des Bedarfsfalles auch das Leitungsteil axial hintereinander wenigstens zwei Bälge aufweisen, wobei benachbarte Bälge ggf. einstückig durch ein Zwischenrohr aus Metall miteinander verbunden sind, dessen Innendurchmesser im wesentlichen dem freien Innendurchmesser der angrenzenden Bälge entspricht.

Hier kann nunmehr mit der erfindungsgemäßen Maßnahme der innere Schlauch gleichzeitig die Aufgabe einer Bedämpfung des Balges bzw. der Bälge und des Zwischenrohres übernehmen, so daß das Leitungsteil in ihn eingeleitete Schwingungen nicht mehr weitergibt sowie bezüglich seines Resonanzschwingungsverhaltens derart verstimmt ist, daß solche Resonanzschwingungen erst gar nicht entstehen können. Dazu ist der Schlauch jetzt wirksam gegen die Balginnenkrempen und/oder das Zwischenrohr in Anlage gebracht.

Die dämpfende Wirkung des Schlauches kann durch die Wahl der Größe der Spreizkraft sowie durch die Ausdehnung und Anordnung der Bereiche der reibenden Anlage zwischen Schlauch und Leitungsteil den jeweiligen Erfordernissen leicht angepaßt werden, so daß auf der einen Seite eine ausreichende Dämpfung erzielt wird, auf der anderen Seite aber zwischen Leitungsteil und Schlauch kein unnötig hoher Reibverbund besteht.

Wie ersichtlich, kommt die Erfindung grundsätzlich mit den bereits üblichen Bauteilen aus, so daß sich insoweit insbesondere keine Gewichtsvermehrung des Leitungselementes ergibt.

Für eine erste Bauweise nach der Erfindung kann vorgesehen sein, daß der Schlauch vor seinem Einbau in das Leitungsteil durch axiales Stauchen zu einem gegenüber dem freien Innendurchmesser des Leitungsteiles größeren Außendurchmesser hin bleibend verformt und anschließend nach einer im wesentlichen im elastischen Bereich liegenden Durchmesserverringerung auf einen dem freien Innendurchmesser entsprechenden Außendurchmesser in das Leitungsteil eingebaut ist.

Hiermit wird der Umstand ausgenutzt, daß die Drähte des Schlauches neben der Endbefestigung des Schlauches an einer weiteren Stelle der Längserstreckung des Schlauches über den Schlauchumfang bleibend gegenseitig festgelegt sind. Wird nunmehr der Schlauch vor dem Einbau in das Leitungsteil entsprechend stark gestaucht, so führt dies an der weiteren Stelle der gegenseitigen Festlegung der Drähte in gewissem Grade zu deren Verbiegung in Richtung auf eine Änderung des gegenseitigen Winkels und damit einer Vergrößerung des Außendurchmessers des Schlauches im Bereich zwischen der einseitigen Befestigung des Schlauches und der weiteren Stelle der gegenseitigen Festlegung der Drähte. Damit entsteht zwischen diesen beiden Stellen eine bombierte Außenkontur des Schlauches mit größerem Außendurchmesser, den der Schlauch an sich beibehalten möchte. Wird nun zum Einbau in das Leitungsteil der Schlauch im elastischen Bereich wieder im Durchmesser reduziert, so behält er eine innere Vorspannung im Sinne einer Durchmesservergrößerung bei, die zu der erfindungsgemäß gewollten reibenden Anlage des Schlauches an den freien Innendurchmesser des Leitungsteiles bildenden Wandungen des Leitungsteiles führt.

Dieses Ergebnis kann andererseits auch dadurch erreicht werden, daß man den Schlauch zunächst staucht, um dann die Drähte an der genannten weiteren Stelle der Längserstreckung des Schlauches gegenseitig festzulegen. Auch hier bleibt nach Durchmesserreduzierung im elastischen Bereich für den Einbau des Geflechtsschlauches in das Leitungsteil die auf eine Durchmesservergrößerung hin strebende innere Vorspannung.

Was die Anordnung der weiteren Stelle mit gegenseitiger Festlegung der Dräht über den Schlauchumfang betrifft, so kann dafür das freie Ende des Schlauches vorgesehen sein, um hier insbesondere auch gleichzeitig eine Auflösung des Geflechtes bzw. Gestrickes zu verhindern. Die weitere Stelle kann aber auch im Bereich zwischen den Enden des Schlauches insbesondere näher zur Verbindung des Schlauches mit dem Leitungsteil hin angeordnet sein, wobei dann eine Auflösung des Schlauchverbundes am freien Ende des Schlauches bewußt in die erfindungsgemäße Aufgabenlösung mit einbezogen wird. Eine solche Auflösung des Schlauchverbundes führt nämlich dann endständig zu einer Durchmesservergrößerung des Schlauches, so daß dieser dann mit seinem freien Ende zusätzlich in reibenden Kontakt mit den Innenwandungen des Leitungsteiles tritt.

In Weiterbildung der Erfindung kann vorgesehen sein, daß neben der weiteren Stelle wenigstens eine zusätzliche Stelle mit gegenseitiger Festlegung der Drähte über den Umfang des Schlauches vorgesehen ist, wobei dann zweckmäßig die weitere sowie die wenigstens eine zusätzliche Stelle mit gegenseitiger Festlegung der Drähte über den Umfang des Schlauches gleichmäßig über die freie Länge des Schlauches verteilt angeordnet sind. Auf diese Weise läßt sich je nach den Anforderungen des Einzelfalles die Zahl der Durchmesservergrößerungen des Schlauches mit in der geschilderten Weise bombiertem Verlauf leicht einrichten und dadurch die Anlagekraft und die Steifigkeit des Schlauches variieren. Durch Verringerung der Abstände der Stellen mit gegenseitiger Festlegung der Drähte ergibt sich also eine größere plastische Verformung des Schlauches beim Stauchen und damit eine größere bleibende Reibwirkung auf das Leitungsteil.

Ferner kann vorgesehen sein, daß wenigstens eine von weiterer oder zusätzlicher Stelle mit gegenseitiger Festlegung der Drähte über den Umfang des Schlauches einen gegenüber dem freien Innendurchmesser des Balges geringeren Außendurchmesser aufweist. Hier geht es darum, daß sich die Größe der im Sinne einer radialen Aufweitung im Schlauch wirkenden Spreizkraft je stärker einstellen läßt, desto geringer der Außendurchmesser an der Stelle der gegenseitigen Festlegung der Drähte gewählt ist, weil dann beim Stauchen des Schlauches auf einen gegenüber dem freien Innendurchmesser des Leitungsteils größeren Außendurchmesser eine um so größere plastische Verformung der Drähte im Bereich deren gegenseitiger Festlegung erfolgt.

Was die gegenseitige Festlegung der Drähte an sich betrifft, so kann diese in an sich bekannter Weise durch gegenseitige Verschweißung gebildet sein, wobei die Anwendung des Rollnaht- oder Punktschweißens insbesondere unter Verwendung der Laserschweißtechnik zweckmäßig ist.

Nach einer anderen, gegebenenfalls zusätzlichen zum Vorstehenden anzuwendenden Form der Erfindung kann vorgesehen sein, daß die die radiale Aufweitung bewirkende Spreizkraft durch in den Schlauch eingesetzte Federmittel aus Metall erzeugt ist, wobei die Federmittel wenigstens eine in den Schlauch eingesetzte und darin in Axialrichtung festgelegte Feder mit schraubengangförmiger Windung oder eine in den Schlauch eingesetzte und darin in Axialrichtung festgelegte ringförmige Feder sein können. Dabei kann die jeweilige Feder aus Bandoder Drahtmaterial hergestellt sein, wobei für eine Feder aus Bandmaterial dessen größere Querschnittsseite zweckmäßig parallel zur Achse des Leitungselementes angeordnet wird.

Dieser Lösungsweg schafft mit geringem Aufwand eine über die Federmittel leicht bestimmbare Spreizkraft, unter der der Schlauch am Inneren des Balges anliegt, wobei sich die Verwendung der Federmittel zusätzlich zu der vorbeschriebenen Bauform insbesondere dann eignet, wenn mit dieser allein eine genügend große Spreizkraft nicht erreichbar ist.

Im gleichen Sinne läßt sich gegebenenfalls zusätzlich eine dritte Bauform anwenden, die darin besteht, daß die Federmittel durch eine in den Schlauch eingesetzte, im wesentlichen der Länge des Schlauches entsprechende, rohrförmige Hülse aus Metall mit im wesentlichen dem freien Innendurchmesser des Leitungsteiles entsprechendem Außendurchmesser ist, daß ein Ende der Hülse in die Verbindung der gemeinsamen Enden von Leitungsteil und Schlauch mit einbezogen ist, daß die Hülse neben diesem Verbindungsbereich beginnende, zur Achse des Leitungselementes parallele sowie über den Hülsenumfang gleichmäßig verteilte Einschlitzungen und dadurch entsprechend verbleibende Finger aufweist, und daß die Finger auf den Schlauch die dessen radiale Aufweitung bewirkende Spreizkraft ausüben.

Hierzu können die Finger über ihre Längserstreckung wenigstens eine nach radial außen gerichtete, vorgebogene Wölbung aufweisen, durch die sich die reibende Anlage zwischen Innerem des Leitungsteiles und Schlauch bestimmen läßt. Um die Spreizwirkung der Finger noch zu erhöhen, kann in die Hülse im Bereich der Finger wenigstens ein Spreizring aus Metall eingesetzt und in Axialrichtung festgelegt sein, wobei der Spreizring zweckmäßig im Bereich des freien Hülsenendes sitzt, wenn vorgesehen ist, daß die die Finger bildenden Einschlitzungen zum freien Ende der Hülse hin offen sind.

Bei allen vorstehend geschilderten Bauformen kann vorgesehen sein, daß der Schlauch mit durch bleibende Verformung hergestellten, lokalen Ausbeulungen versehen ist. Diese können vorher am Schlauch durch entsprechende Prägeverfahren angebracht werden und geben die Möglichkeit, die Stellen der reibenden Anlage zwischen Innerem des Leitungselementes und Schlauch nach Lage und Größe genau vorherzubestimmen. Zweckmäßig wird es hier in der Regel sein, daß die Ausbeulungen gleichmäßig über die freie Länge des Schlauches verteilt angeordnet sind.

Grundsätzlich kann für alle Bauformen nach der Erfindung vorgesehen sein, daß die feste Verbindung des gemeinsamen Endes von Leitungsteil und Schlauch unter Hinzufügung eines darin spielfrei eingesetzten inneren Stützringes gebildet ist, wobei die feste Verbindung in an sich bekannter Weise zum Beispiel durch Punktschweißen oder durch gegenseitiges radiales Verpressen der die Enden des Leitungselemtenes bildenden Teile hergestellt sein kann. Ist in den Schlauch in der vorbeschriebenen Weise eine Hülse eingesetzt, so kann in diesem Falle der Stützring durch die Hülse selbst gebildet sein.

Ferner ist es zweckmäßig, daß wenigstens das mit einem Ende des Schlauches verbundene zylindrische Anschlußende des Leitungsteiles einen größeren Innendurchmesser aufweist als der wesentliche Teil des übrigen Längenabschnittes des Leitungsteiles. Hiermit läßt sich dieses Ende durch Aufstecken mit der anschließenden Leitung verbinden so, daß der Innenquerschnitt der anschließenden Leitung im wesentlichen dem für die Gasströmung bleibenden Innenquerschnitt des Leitungselementes entspricht.

Wird diese Bauform des Leitungselementes gewählt, so ist es vorteilhaft, daß bei Bildung des zylindrischen Anschußendes durch das Ende eines Balges die erste neben dem zylindrischen Anschlußende gelegene Innenkrempe des Balges einen Innendurchmesser aufweist, der im wesentlichen zwischen dem Innendurchmesser des zylindrischen Anschlußendes und dem freien Innendurchmesser des Balges liegt. Auf diese Weise wird vom Anschlußende ausgehend der Schlauch mit bogenförmigem Übergang in den freien Innendurchmesser des Balges geführt, so daß es neben dem Anschlußende nicht zu einer besonderen Beanspruchung durch einen Durchmessersprung kommen kann.

Was die Länge des Schlauches betrifft, so kann sich dieser über die wesentliche Länge des Leitungsteiles, insbesondere die gewellten Balgbereiche erstrecken. Es kann sich jedoch auch der Schlauch mit seinem freien Ende über das diesem zugeordnete Ende des Leitungsteiles hinaus erstrecken, wo dem Schlauchende zweckmäßig ein etwas reduzierter Durchmesser gegeben wird. Dann ist das freie Schlauchende durch die weiterführende Leitung geführt und die Gasströmung ist von den Unebenheiten der Verbindung zwischen Leitungsteil und weiterführender Leitung ferngehalten.

Das erfindungsgemäße Leitungselement kann außerdem in an sich bekannter Weise dadurch weitergebildet sein, daß das Leitungsteil eine durch einen Geflechtsschlauch aus Metall gebildete, an ihm anliegende Ummantelung aufweist, und daß die beiden Enden der Ummantelung mit den zylindrischen Enden des Leitungsteiles fest verbunden sind, was wiederum beispielsweise durch Punktschweißen oder durch gegenseitiges radiales Verpressen der die Anschlußenden bildenden Teile geschehen kann. Eine solche Geflechtsummantelung dient dem Schutz des Leitungsteiles und insbesondere der Balgmittel gegenüber äußeren Einflüssen und bildet im übrigen eine Axialabstützung gegen ungewollte Längenvergrößerung der Balgmittel beispielsweise unter auftretendem Innendruck.

Hier ist es vorteilhaft, daß die jeweilige Verbindung zwischen Ummantelung und zylindrischen Enden des Leitungsteiles unter Hinzufügung eines von außen spielfrei aufgesetzten und in die feste Verbindung mit einbezogenen Stützringes aus Metall gebildet ist.

Darüber hinaus kann bei dieser Bauform vorgesehen sein, daß das dem gewellten Teil eines anschließenden Balges zugekehrte Ende des jeweiligen Stützringes im wesentlichen konisch aufgeweitet ist, um hier eine Reibkante zwischen Stützring und Geflechtsummantelung zu vermeiden.

Wird gleichzeitig vorgesehen, daß zumindest die erste jeweils neben den zylindrischen Anschlußenden eines Balges gelegene Außenkrempe des Balges einen reduzierten Außendurchmesser aufweist, der im wesentlichen zwischen dem Außendurchmesser des übrigen gewellten Teiles des Balges und dem des benachbarten zylindrischen Anschlußendes liegt, so ist auch hier dafür gesorgt, daß der Durchmesser der Geflechtsummantelung nicht sprunghaft von einem Durchmesser auf den anderen Durchmesser übergeht.

Schließlich kann insbesondere für den inneren Schlauch vorgesehen sein, daß dieser mit korrosions- und temperaturbeständigem Material beschichtet ist, wobei das Beschichtungsmaterial zweckmäßig Leiteigenschaften aufweist, um den reibenden Verschleiß zwischen Leitungsteil und Schlauch möglichst gering zu halten. Dem gleichen Zweck kann aber auch dienen, daß der innere Schlauch unter Hinzunahme von Glasfasern hergestellt und/oder mit einem Glasfasergeflecht oder -gestricke überzogen ist.

Weitere Merkmale der Erfindung und deren Einzelheiten ergeben sich aus der nachfolgenden Beschreibung von Ausführungsformen, die auf der Zeichnung dargestellt sind. In der Zeichnung zeigen:
- Figur 1: die erfindungsgemäße Ausbildung eines Leitungselementes insbesondere für Abgas- und Abgasrückführleitungen von Kraftfahrzeugen im Axialschnitt und
- Figuren 2 - 12: Abwandlungen eines derartigen Leitungselementes ebenfalls im Axialschnitt.

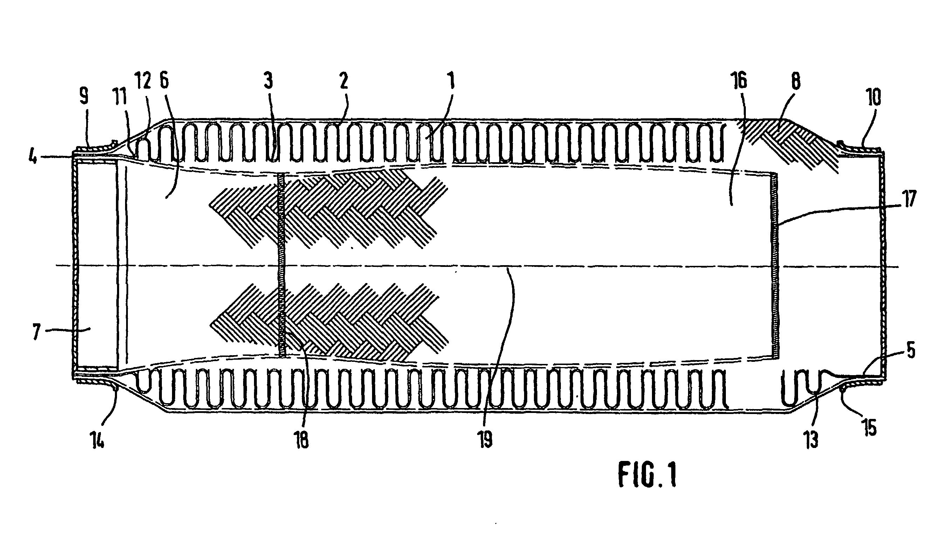

Das Leitungselement gemäß Figur 1 besteht im wesentlichen aus einem Leitungsteil in Form eines ringgewellten Balges 1, wobei die Balgwellen Außenkrempen 2 und Innenkrempen 3 bilden. Der Balg 1 hat zylindrische Anschlußenden 4, 5, wobei im Anschlußende 4 das dortige Ende eines inneren Geflechtsschlauches 6 aus Metall zusammen mit einem darin angeordneten Stützring 7 aus Metall sitzt.

Außen ist der Balg 1 von einer Ummantelung 8 in Form eines Geflechtsschlauches umgeben, die an beiden Enden mit Hilfe äußerer Stützringe 9, 10 mit den zylindrischen Anschlußenden 4, 5 des Balges 1 verbunden ist und im übrigen den Balg 1 im wesentlichen spielfrei umgibt.

Die endständige Verbindung der Teile 4, 6, 7, 8 und 9 einerseits sowie der Teile 5, 8 und 10 andererseits kann in üblicher Weise durch Punktschweißen oder durch gegenseitiges radiales Verpressen der genannten Teile von innen nach außen und/oder von außen nach innen hergestellt sein.

Mit den so gebildeten Anschlußenden ist das dargestellte Leitungselement beidseitig auf nicht dargestellte, weiterführende Leitungen aufsteckbar.

Wie ersichtlich, ist der Innendurchmesser der zylindrischen Anschlußenden 4, 5 des Balges 1 größer als der durch die Innenkrempen 3 der Wellung des Balges 1 gebildete freie Innenquerschnitt des Balges. Damit vom Anschlußende 4 ausgehend der Übergang des Geflechtsschlauches 6 auf den freien Innenquerschnitt des Balges 1 und der Übergang des Geflechtsschlauches 8 auf den Außenquerschnitt des Balges 1 allmählich erfolgen können, ist die neben dem Anschlußende 4 gelegene erste Innenkrempe 11 der Balgwellung im Durchmesser etwas gegenüber dem Durchmesser der Innenkrempen 3 vergrößert, während die erste Außenkrempe 12 der Balgwellung etwas im Durchmesser gegenüber dem der Außenkrempen 2 des Balges 1 verringert ist. Zumindest die letztgenannte Durchmesserverringerung der Außenkrempe 12 findet sich wieder bei der neben dem Anschlußende 5 gelegenenen Außenkrempe 13.

Die äußeren Stützringe 9 und 10 sind bezüglich ihrer der Mitte des Balges 1 zugewandten Seite mit einer konischen Aufweitung bzw. Aufbördelung 14, 15 versehen, um hier Kantenpressung gegenüber dem äußeren Geflechtsschlauch 8 zu vermeiden.

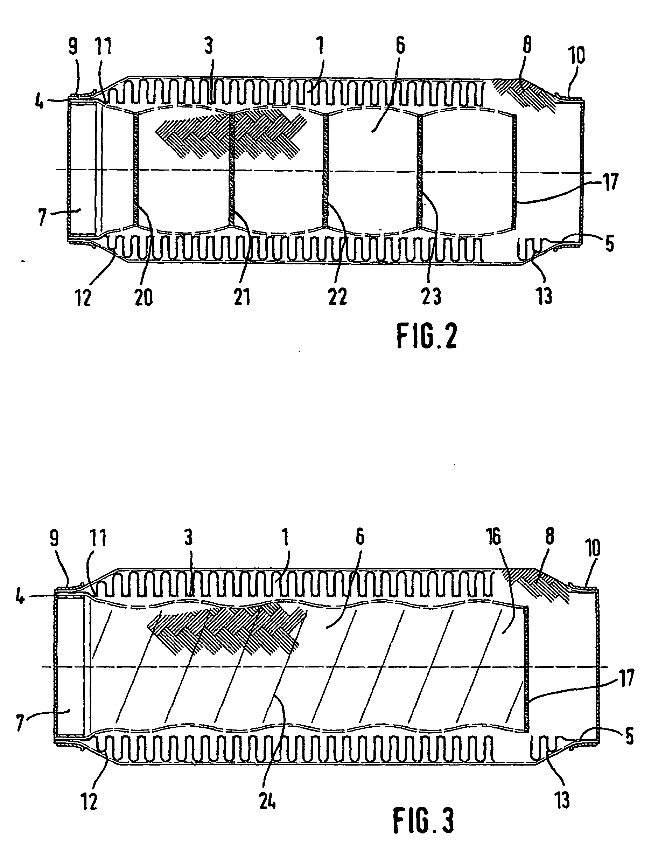

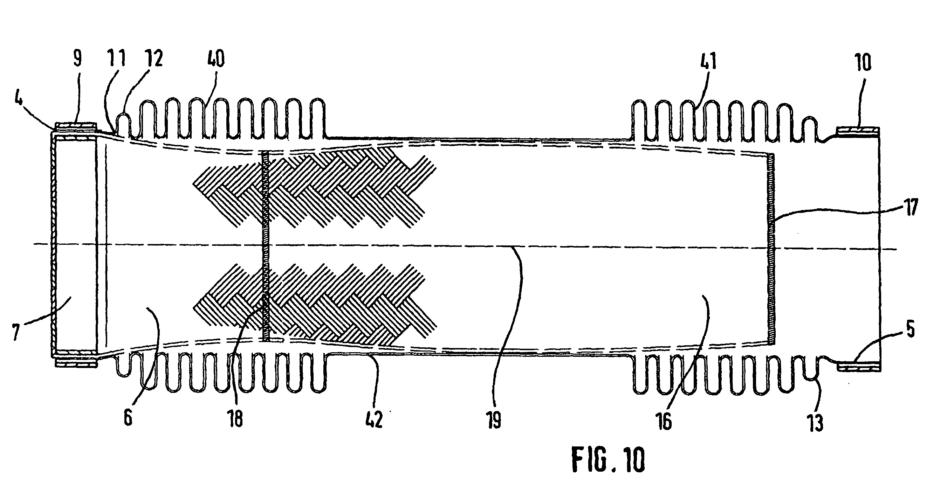

Der soweit geschilderte Grundaufbau des Leitungselementes gemäß Figur 1 kehrt bei den Ausführungsformen gemäß Figuren 2 bis 9 ganz und gemäß Figuren 10 bis 12 teilweise wieder, weshalb er insoweit anhand dieser Figuren nicht noch einmal beschrieben ist sondern unter Verwendung der mit Figur 1 eingeführten Bezifferung weitergilt.

Bei der Ausführungsform gemäß Figur 1 erstreckt sich nun wie auch bei den Ausführungsformen gemäß Figuren 2 bis 9 der innere Geflechtsschlauch 6 im wesentlichen über den gesamten gewellten Bereich des Balges 1 unter Bildung eines freien Endes 16, an dem die den Geflechtsschlauch 6 bildenden Drähte über den Umfang des Geflechtsschlauches 6 beispielsweise durch Rollnahtschweißung 17 gegenseitig festgelegt bzw. fest miteinander verbunden sind. Eine weitere Stelle 18 einer solchen durch Rollnahtschweißung gebildeten gegenseitigen Festlegung der den Geflechtsschlauch 6 bildenden Drähte befindet sich im Bereich zwischen den beiden Enden des Geflechtsschlauches 6, bei der Ausführungsform gemäß Figur 1 näher zum Anschlußende 4 hin gelegen.

Im vorliegenden Falle sind die Stellen 17, 18 der gegenseitigen Festlegung der den Geflechtsschlauch 6 bildenden Drähte vor dem Einbau des Geflechtsschlauches 6 in den Balg 1 bei einem Durchmesser des Geflechtsschlauches hergestellt, der ersichtlich kleiner als der durch die Innenkrempen 3 des Balges 1 gebildete freie Innendurchmesser des Balges 1 ist. Danach wurde der Geflechtsschlauch 6 soweit gestaucht, daß er unter bleibender Verformung der ihn bildenden Drähte im Bereich der Stellen 17 und 18 zwischen diesen beiden Stellen einen Außendurchmesser annahm, der wesentlich größer war als der durch die Innenkrempen 3 gebildete freie Innendurchmesser des Balges 1. Zum Einbau des Geflechtsschlauches 6 wurde dann sein Durchmesser zwischen den Stellen 17, 18 unter elastischer Verformung der Drähte im Bereich der Stellen 17, 18 wieder auf das durch die Innenkrempen 3 vorgegebene Maß reduziert. Durch die genannte plastische Verformung der Drähte des Geflechtsschlauches 6 verbleibt in diesem dabei zwischen den Stellen 17, 18 eine den Geflechtsschlauch auf einen größeren Außendurchmesser hin drängende Vorspannung, die zu der aus Figur 1 ersichtlichen, in Richtung der Achse 19 des Leitungselementes sich erstreckenden Bombierung und damit zur vorgespannten Anlage des Geflechtsschlauches 6 an einem Teil der Innenkrempen 3 des Balges 1 führt.

Auf diese Weise erfüllt beispielsweise innerhalb der Abgasanlage eines Kraftfahrzeuges der Geflechtsschlauch 6 nicht nur die Aufgabe, die im vorliegenden Falle von links der Figur 1 kommende Gasströmung insbesondere von den Innenkrempen 3 des Balges 1 fernzuhalten und damit dort eine Wirbelbildung sowie Überhitzung zu verhindern, sondern er erfüllt durch die reibende Anlage an den Innenkrempen 3 des Balges 1 auch die Aufgabe, die Übertragung von Schwingungen durch den Balg 1 auszudämpfen bzw. Resonanzschwingungen des Balges 1 zu verhindern, womit auch resonanzschwingungsbedingten Brüchen des Balges 1 vorgebeugt ist.

Die Ausführungsform gemäß Figur 2 unterscheidet sich von der nach Figur 1 dadurch, daß der innere Geflechtsschlauch 6 zwischen seinen Enden mit insgesamt vier zusätzlichen Stellen 20 bis 23 versehen ist, an denen die den Geflechtsschlauch 6 bildenden Drähte über den Umfang des Geflechtsschlauches beispielsweise durch Schweißen gegenseitig festgelegt sind. Die Stellen 20 bis 23 sind zwischen den Enden des Geflechtsschlauches 6 gleichmäßig verteilt angeordnet. Wie ersichtlich, ist nunmehr durch entsprechende vorhergehende Stauchung des Geflechtsschlauches 6 jeweils zwischen allen Stellen 17, 20 bis 23 ein nach außen bombierter Längsquerschnitt des Geflechtsschlauches 6 erreicht, wodurch im vorliegenden Falle an vier Längsbereichen des Geflechtsschlauches 6 dessen reibende Anlage an den Innenkrempen 3 des Balges 1 gegeben ist. Damit ist offenbar, daß durch Zahl und Anordnung von die Drähte des Geflechtsschlauches 6 gegenseitig festlegenden Stellen die Art der Anlage des Geflechtsschlauches 6 gegen die Innenkrempen 3 des Balges 1 den verschiedensten Anforderungen angepaßt werden kann.

Bei der Ausführungsform nach Figur 3 hat der innere Geflechtsschlauch 6 nur an seinem freien Ende 16 einen über den Umfang gehenden Verbund 17 zwischen den den Geflechtsschlauch 6 bildenden Drähten. Im übrigen ist dem Geflechtsschlauch 6 durch entsprechende Werkzeuge beispielsweise im Zuge des Stauchens eine schraubengangförmige Wellung 24 aufgeprägt, die ebenfalls zu einer nur abschnittweisen gegenseitigen Anlage von Geflechtsschlauch 6 und Balg 1 führt. Diese Ausführungsform bringt an sich nur eine geringe Anlagekraft zwischen Balg 1 und Geflechtsschlauch 6, was jedoch für Einsatzfälle mit geringerer Beanspruchung vollkommen ausreichend sein kann.

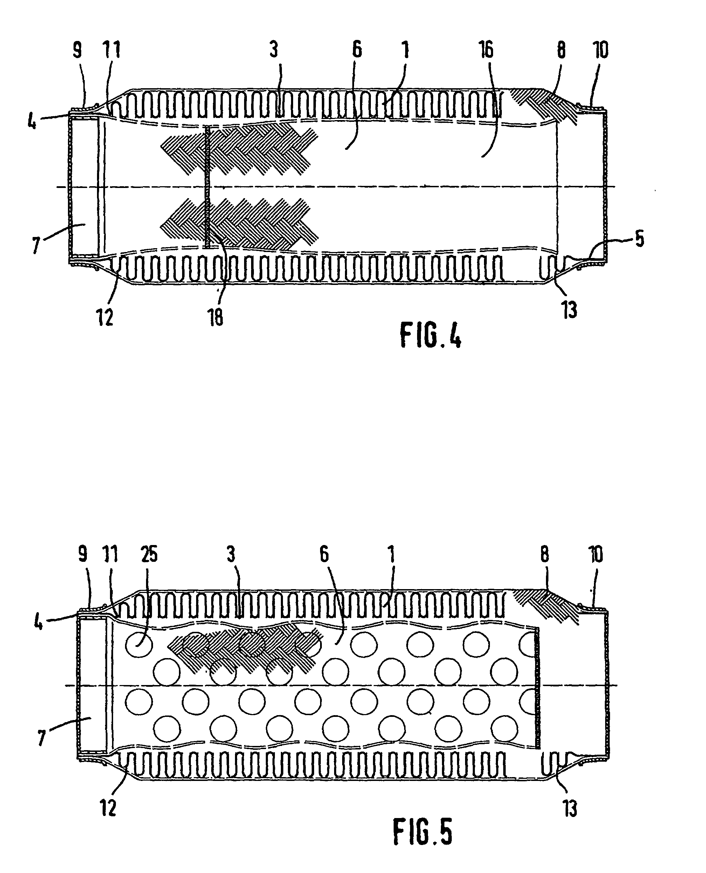

Die Bauform nach Figur 4 unterscheidet sich von der gemäß Figur 1 lediglich dadurch, daß die über den Umfang geschweißte Stelle 17 des Geflechtsschlauches 6 gemäß Figur 1 fortgelassen ist, so daß das freie Ende 16 des Geflechtsschlauches 6 sich unter der für Geflechtsschläuche üblichen Weise aufweiten und dadurch mit den Innenkrempen 3 des Balges 1 in reibende Berührung treten kann.

Bei der Bauform gemäß Figur 5 ist dem Geflechtsschlauch 6 grundsätzlich wieder die bereits anhand der Figur 3 dargestellte und beschriebene Gestaltung gegeben. Zusätzlich ist der Geflechtsschlauch 6 mit nach radial außen gerichteten Ausprägungen 25 versehen, wodurch sich ein mit Warzen versehenes Äußeres ergibt und gerade diese Ausprägungen 25 mit den Innenkrempen 3 des Balges 1 in Berührung treten. Durch Wahl der Anzahl und Größe der Ausprägungen 25 läßt sich leicht der Umfang der reibenden Berührung zwischen Geflechtsschlauch 6 und Balg 1 bestimmen.

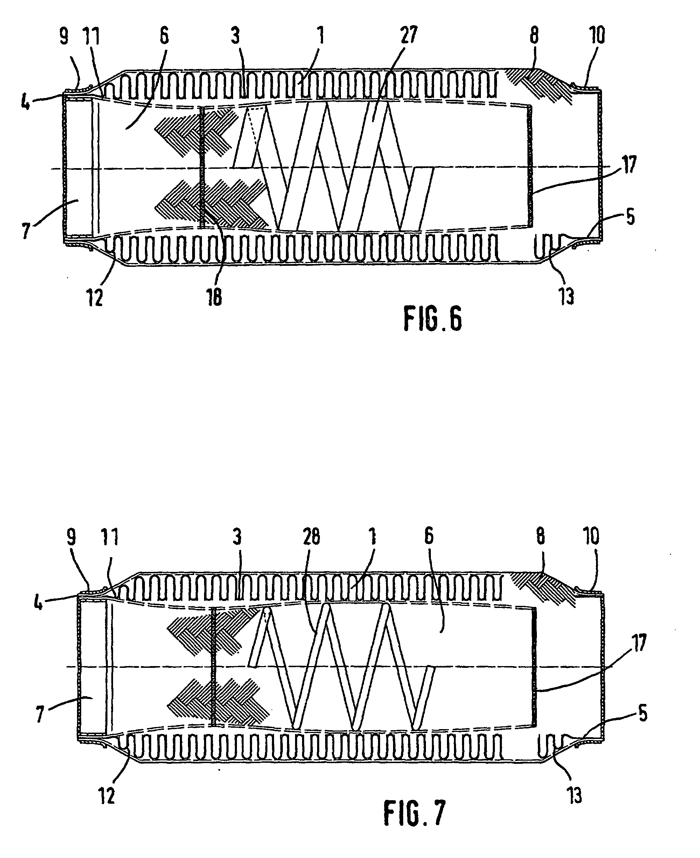

Die Ausführungsform gemäß Figur 6 unterscheidet sich von der Bauform nach Figur 1 dadurch, daß in den Geflechtsschlauch 6 zusätzlich eine aus Bandmaterial gebildete, schraubengangförmig gewundene Feder 27 eingesetzt ist, die im Außendurchmesser so bemessen ist, daß sie in eingebautem Zustand auf den Geflechtsschlauch 6 eine ihn spreizende Radialkraft ausübt. Hierdurch kann die anhand der Figur 1 bereits beschriebene, den Geflechtsschlauch 6 in Anlage an die Innenkrempen 3 des Balges 1 bringende Spreizkraft noch verstärkt werden, wenn eine höhere Reibung und damit eine größere Dämpfungswirkung erwünscht ist. Dadurch, daß die Feder 27 zwischen den einen geringeren Außendurchmesser aufweisenden Stellen 17 und 18 sitzt, ist sie bezüglich ihrer axialen Positionierung fixiert.

Bei dem Beispiel nach Figur 7 besteht gegenüber dem gemäß Figur 6 ein Unterschied nur darin, daß die schraubengangförmig gewundene Feder 28 aus Runddraht hergestellt ist.

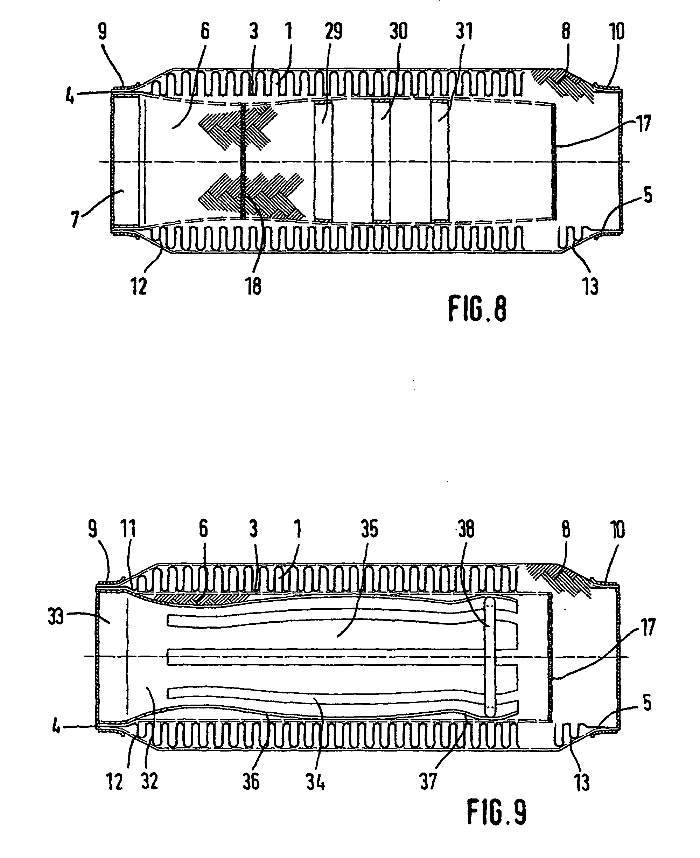

Ähnlich unterscheidet sich die Gestaltung nach Figur 8 von der der Figuren 6 und 7 lediglich dadurch, daß die schraubengangförmig gewundenen Federn 27 bzw. 28 durch nebeneinander sitzende Federringe 29, 30, 31 ersetzt sind, die bezüglich ihrer axialen Fixierung beispielsweise durch Schweißpunkte am Geflechtsschlauch 6 festgelegt sein können.

Figur 9 zeigt ein Beispiel, gemäß dem der Geflechtsschlauch 6 vor seinem Einbau in den Balg 1 nicht gestaucht sein mag. Dafür ist in den Geflechtsschlauch 6 eine Hülse 32 aus Metall eingesetzt, deren Länge im wesentlichen der des Geflechtsschlauches 6 entspricht.

Das linke Ende 33 der Hülse ist in die Verbindung der gemeinsamen Enden von Balg 1 und Geflechtsschlauch 6 mit einbezogen. Neben diesem Verbindungsbereich beginnen zur Achse 19 des Leitungselementes parallele sowie über den Hülsenumfang gleichmäßig verteilte Einschlitzungen 34, die zwischen sich aus dem Material der Hülse bleibende Finger 35 bilden. Die Einschlitzungen 34 sind im vorliegenden Falle zum freien Ende der Hülse 32 hin offen, was jedoch nicht notwendigerweise der Fall sein muß, denn die Hülse 32 kann bezogen auf Figur 9 am rechten Ende ebenso wieder geschlossen umlaufend ausgebildet sein wie mit ihrem Ende 33.

Die Finger 35 weisen über ihre Längserstreckung 2 nach radial außen gerichtete, vorgebogene Wölbungen 36, 37 auf, mit denen sie nach radial außen federnd vorgespannt den Geflechtsschlauch 6 von innen gegen die Innenkrempen 3 des Balges 1 drücken. Um diese Spreizwirkung zu unterstützen, kann innerhalb der Wölbung 37 der Finger 35 ein Spreizring 38 aus Metall eingesetzt sein, der durch seinen Sitz innerhalb der Wölbung 37 in Axialrichtung festgelegt ist.

Wie ersichtlich, bildet im Falle der Figur 9 das Hülsenende 33 gleichzeitig den Gegenstand, der bei den übrigen Bauformen nach Figur 1 bis 8 durch den inneren Stützring 7 dargestellt ist.

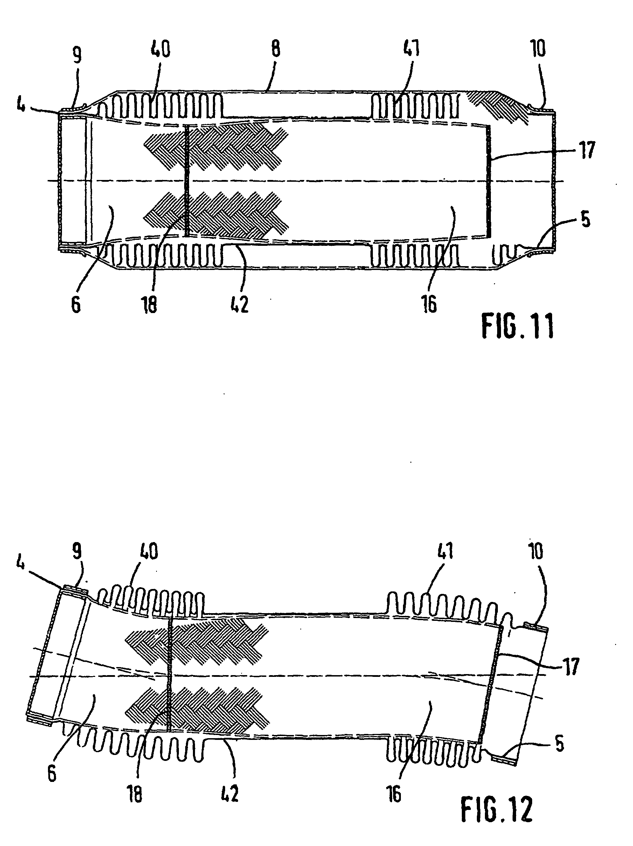

Während bei den bisher geschilderten Bauformen das Leitungsteil ausschließlich durch den Balg 1 gebildet wurde, ist es bei den Ausführungen nach den Figuren 10 bis 12 durch zwei axial hintereinander angeordnete Bälge 40 und 41 und ein diese verbindendes Zwischenrohr 42 gebildet. Bälge 40, 41 und Zwischenrohr können durch geeignete, fluiddichte Fügeverfahren miteinander verbunden sein, aber auch einstückig aus einem gemeinsamen Rohrmaterial hergestellt sein. Der innere Geflechtsschlauch 6 entspricht wieder dem bisher beschriebenen, welshalb insoweit auf das vorstehend Gesagte verwiesen wird. Lediglich die Länge des inneren Geflechtsschlauches ist der jetztigen Länge des Leitungsteiles angepaßt. Im Falle der Figuren 10 bis 12 liegt der Geflechtsschlauch 6 im wesentlichen am Zwischenrohr an. Bei Verwendung dessen Gestaltung beispielsweise nach Figur 2 ergäben sich Anlagen auch an den Innenkrempen der Bälge 40, 41. Der Gegenstand gemäß Figur 11 zeigt den gemäß Figur 10, jedoch mit einer Ummantelung 8 in Form eines Geflechtsschlauches, wozu ebenfalls auf die zugehörige frühere Beschreibung verwiesen wird. Schließlich zeigt Figur 12 den Gegenstand gemäß Figur 10 für eine Einbausituation mit radial gegeneinander versetzten Anschlußenden.

Bei allen vorstehend beschriebenen Ausführungsformen der Erfindung ist bezüglich des inneren Geflechtsschlauches davon gesprochen, daß dieser aus Metalldraht besteht. Zur Verbesserung der Gebrauchseigenschaften kann dabei der Metalldraht mit einem korrosions- und temperaturbeständigen Material beschichtet sein, das vorzugsweise Gleiteigenschaften aufweist. Andererseits kann der Geflechtsschlauch aber auch unter Hinzunahme von Glasfasern hergestellt und/oder mit einem Glasfasergeflecht überzogen sein, um die Reibeigenschaften gegenüber dem Balg 1 günstig zu beeinflussen.

In nicht dargestellter Weise kann jeweils der Geflechtsschlauch 6 auch auf seiner Außenseite mit einer Beschichtung aus korrosions- und temperaturbeständigem, wärmeisolierenden Material versehen sein, um einmal den Balg 1 temperaturmäßig weiter zu entlasten und um zum anderen aber auch Temperaturverluste des Abgases zu verhindern.

Ferner ist bei allen geschilderten Ausführungsformen der innere Geflechtsschlauch 6 kürzer als das Leitungsteil 1 bzw. 40 bis 42. Hier ist auch eine längere Ausbildung dergestalt denkbar, daß der Geflechtsschlauch 6 mit seinem freien Ende 16 das zugeordnete Anschlußende 5 des Leitungsteiles überragt, also bis in die nicht dargestellte weiterführende Leitung vorsteht. Dadurch lassen sich bezüglich des Gasstromes die in diesem Anschlußbereich evtl. gegebenen Unebenheiten abdecken.

Die Ausführungen nach den Figuren 10 bis 12 sind auch so denkbar, daß ein innerer Geflechtsschlauch in Strömungsrichtung des Gases jeweils am Vorderende jedes der Bälge 40, 41 beginnt und sich im wesentlichen über die Länge des zugeordneten Balges erstreckt. Das wäre dann praktisch die Verbindung zweier Leitungselemente nach den Fiugren 1 bis 9 durch ein Zwischenrohr.

Anhand der Figur 1 wurde bereits erwähnt, daß das Leitungselement zweckmäßig von Seiten der festen Verbindung zwischen Leitungsteil und innerem Geflechtsschlauch durchströmt ist. Dies gilt auch für die Bauformen nach den Figuren 2 bis 12.

## Patentansprüche

1. Leitungselement, insbesondere für Abgas- und Abgasrückführleitungen von Verbrennungsmotoren bei Kraftfahrzeugen, mit einem mit zylindrischen Anschlußenden versehenen Leitungsteil aus Metall, das wenigstens einen mit zylindrischen Anschlußenden versehenen, schraubengangförmig oder ringgewellten flexiblen Balg (1) enthält, und einem darin koaxial angeordneten Geflechtsschlauch (6) oder Gestrickeschlauch aus Metalldraht, wobei Leitungsteil und Schlauch verbunden sind, der Außendurchmesser des Schlauches im wesentlichen dem freien Innendurchmessers des Leitungsteiles entspricht und an einer weiteren Stelle der Längserstreckung des Schlauches dessen Drähte über den Schlauchumfang bleibend gegenseitig festgelegt sind,
**dadurch gekennzeichnet,**
**daß** Leitungsteil und Schlauch nur an einem gemeinsamen Ende (4) fest mit ein an der verbunden sind und, **daß** der Schlauch (6) durch eine auf ihn im Sinne einer radialen Aufweitung wirkende Spreizkraft wenigstens an einer Stelle in reibende Anlage gegen die den freien Innendurchmesser des Leitungsteiles (1, 40 - 42) bildenden Wandungen des Leitungsteiles (1, 40 - 42) gebracht ist.

2. Leitungselement nach Anspruch 1,
**dadurch gekennzeichnet,**
**daß** das Leitungsteil axial hintereinander wenigstens zwei Bälge (40, 41) aufweist, **daß** benachbarte Bälge (40, 41) durch ein Zwischenrohr (42) aus Metall miteinander verbunden sind, und **daß** der Innendurchmesser des Zwischenrohres (42) im wesentlichen dem freien Innendurchmesser der angrenzenden Bälge (40, 41) entspricht.

3. Leitungselement nach Anspruch 1 oder 2,
**dadurch gekennzeichnet,**
**daß** der Schlauch (6) vor seinem Einbau in das Leitungsteil (1, 40 - 42) durch axiales Stauchen zu einem gegenüber dem freien Innendurchmesser des Leitungsteiles (1, 40 - 42) größeren Außendurchmesser hin bleibend verformt und anschließend nach einer im wesentlichen im elastischen Bereich liegenden Durchmesserverringerung auf einen dem freien Innendurchmesser entsprechenden Außendurchmesser in das Leitungsteil (1, 40 bis 42) eingebaut ist.

4. Leitungselement nach einem oder mehreren der Ansprüche 1 bis 3,
**dadurch gekennzeichnet,**
**daß** die weitere Stelle (17) mit gegenseitiger Festlegung der Drähte über den Schlauchumfang das freie Ende des Schlauches ist.

5. Leitungselement nach einem oder mehreren der Ansprüche 1 bis 3,
**dadurch gekennzeichnet,**
**daß** die weitere Stelle (18) mit gegenseitiger Festlegung der Drähte über den Schlauchumfang im Bereich zwischen den Enden des Schlauches (6) angeordnet ist.

6. Leitungselement nach Anspruch 5,
**dadurch gekennzeichnet,**
**daß** die weitere Stelle (18) der festen Verbindung von Schlauch (6) und Leitungsteil (1, 40 bis 42) näher als dem freien Ende (16) des Schlauches (6) ist.

7. Leitungselement nach einem oder mehreren der Ansprüche 1 bis 6,
**dadurch gekennzeichnet,**
**daß** neben der weiteren Stelle (17 bzw. 18) wenigstens eine zusätzliche Stelle (18 bzw. 17, 20 bis 23) mit gegenseitiger Festlegung der Drähte über den Umfang des Schlauches (6) vorgesehen ist.

8. Leitungselement nach einem oder mehreren der Ansprüche 1 bis 7,
**dadurch gekennzeichnet,**
**daß** die weitere (17 bzw. 18) sowie die wenigstens eine zusätzliche Stelle (18 bzw. 17, 20 bis 23) mit gegenseitiger Festlegung der Drähte über den Umfang des Schlauches (6) gleichmäßig über die freie Länge des Schlauches (6) verteilt angeordnet sind.

9. Leitungselement nach einem oder mehreren der Ansprüche 1 bis 8,
**dadurch gekennzeichnet,**
**daß** wenigstens eine von weiterer (17 bzw. 18) oder zusätzlicher Stelle (18 bzw. 17, 20 bis 23) mit gegenseitiger Festlegung der Drähte über den Umfang des Schlauches (6) ein gegenüber dem freien Innendurchmesser des Leitungselementes (1, 40 bis 42) geringeren Außendurchmesser aufweist.

10. Leitungselement nach einem oder mehreren der Ansprüche 1 bis 9,
**dadurch gekennzeichnet,**
**daß** die Stellen (17, 18, 20 bis 23) mit gegenseitiger Festlegung der Drähte über den Umfang des Schlauches (6) durch Verschweißung der Drähte miteinander gebildet sind.

11. Leitungselement nach Anspruch 10,
**dadurch gekennzeichnet,**
**daß** die Drähte durch Rollnaht- oder Punktschweißen miteinander verbunden sind.

12. Leitungselement nach Anspruch 11,
**dadurch gekennzeichnet,**
**daß** die Schweißverbindung unter Anwendung der Laserschweißtechnik hergestellt ist.

13. Leitungselement nach einem oder mehreren der Ansprüche 1 bis 12,
**dadurch gekennzeichnet,**
**daß** die die radiale Aufweitung bewirkende Spreizkraft durch in den Schlauch (6) eingesetzte Federmittel (27 bis 32) aus Metall erzeugt ist.

14. Leitungselement nach Anspruch 13,
**dadurch gekennzeichnet,**
**daß** die Federmittel wenigstens eine in den Schlauch (6) eingesetzte und darin in Axialrichtung festgelegte Feder (27, 28) mit schraubengangförmiger Windung sind.

15. Leitungselement nach Anspruch 13,
**dadurch gekennzeichnet,**
**daß** die Federmittel wenigstens eine in den Schlauch (6) eingesetzte und darin in Axialrichtung festgelegte ringförmige Feder (29 bis 31) sind.

16. Leitungselement nach Anspruch 14 oder 15,
**dadurch gekennzeichnet,**
**daß** die Feder (27 bis 31) aus Band- oder Drahtmaterial hergestellt ist.

17. Leitungselement nach Anspruch 16,
**dadurch gekennzeichnet,**
**daß** die Feder (27, 29 bis 31) aus mit seinen größeren Querschnittsseiten zur Achse (19) des Leitungselementes parallel angeordnetem Flachband hergestellt ist.

18. Leitungselement nach Anspruch 16,
**dadurch gekennzeichnet,**
**daß** die Feder (28) aus Runddraht hergestellt ist.

19. Leitungselement nach Anspruch 13,
**dadurch gekennzeichnet,**
**daß** die Federmittel durch eine in den Schlauch (6) eingesetzte, im wesentlichen der Länge des Schlauches (6) entsprechende, rohrförmige Hülse (32) aus Metall mit im wesentlichen dem freien Innendurchmesser des Leitungsteiles (1, 40 bis 42) entsprechendem Außendurchmesser ist, **daß** ein Ende (33) der Hülse (32) in die Verbindung der gemeinsamen Enden von Leitungsteil (1, 40 bis 42) und Schlauch (6) mit einbezogen ist, **daß** die Hülse (32) neben diesem Verbindungsbereich beginnende, zur Achse (19) des Leitungselementes parallele sowie über den Hülsenumfang gleichmäßig verteilte Einschlitzungen (34) und dadurch entsprechend verbleibende Finger (35) aufweist, und **daß** die Finger (35) auf den Schlauch (6) die dessen radiale Aufweitung bewirkende Spreizkraft ausüben.

20. Leitungselement nach Anspruch 19,
**dadurch gekennzeichnet.**
**daß** die Einschlitzungen (34) zum freien Ende der Hülse (32) hin offen sind.

21. Leitungselement nach Anspruch 19 oder 20,
**dadurch gekennzeichnet,**
**daß** die Finger (35) über ihre Längserstreckung wenigstens eine nach radial außen gerichtete, vorgebogene Wölbung (36, 37) aufweisen.

22. Leitungselement nach einem oder mehreren der Ansprüche 19 bis 21,
**dadurch gekennzeichnet,**
**daß** in die Hülse (32) im Bereich der Finger (35) wenigstens ein Spreizring (38) aus Metall eingesetzt und in Axialrichtung festgelegt ist.

23. Leitungselement nach einem oder mehreren der Ansprüche 19 bis 22,
**dadurch gekennzeichnet,**
**daß** der Spreizring (38) im Bereich des freien Hülsenendes sitzt.

24. Leitungselement nach einem oder mehreren der Ansprüche 1 bis 23,
**dadurch gekennzeichnet,**
**daß** der Schlauch (6) mit durch bleibende Verformung hergestellten, lokalen Ausbeulungen (25) versehen ist.

25. Leitungselement nach Anspruch 24,
**dadurch gekennzeichnet,**
**daß** die Ausbeulungen (25) gleichmäßig über die freie Länge des Schlauches (6) verteilt angeordnet sind.

26. Leitungselement nach einem oder mehreren der Ansprüche 1 bis 25,
**dadurch gekennzeichnet,**
**daß** die feste Verbindung des gemeinsamen Endes von Leitungsteil (1, 40 bis 42) und Schlauch (6) unter Hinzufügung eines darin spielfrei eingesetzten inneren Stützringes (7) gebildet ist.

27. Leitungselement nach einem oder mehreren der Ansprüche 19 bis 26,
**dadurch gekennzeichnet,**
**daß** der Stützring durch die Hülse (32) gebildet bzw. deren Bestandteil ist.

28. Leitungselement nach einem oder mehreren der Ansprüche 1 bis 27,
**dadurch gekennzeichnet,**
**daß** wenigstens das mit einem Ende des Schlauches fest verbundene zylindrische Anschlußende (4) des Leitungsteiles (1, 40 bis 42) einen größeren Innendurchmesser aufweist als der wesentliche Teil des übrigen Längenabschnittes des Leitungsteiles (1, 40 bis 42).

29. Leitungselement nach Anspruch 28,
**dadurch gekennzeichnet,**
**daß** bei Bildung des zylindrischen Anschlußendes (4) durch das Ende eines Balges (1) die erste neben dem zylindrischen Anschlußende (4) gelegene Innenkrempe (11) des Balges (1) einen Innendurchmesser aufweist, der im wesentlichen zwischen dem Innendurchmesser des zylindrischen Anschlußendes (4) und dem freien Innendurchmesser des Balges (1) liegt.

30. Leitungselement nach einem oder mehreren der Ansprüche 1 bis 29,
**dadurch gekennzeichnet,**
**daß** der Schlauch (6) sich über die wesentliche Länge des Leitungsteiles (1, 40 bis 42), insbesondere die gewellten Balgbereiche erstreckt.

31. Leitungselement nach einem oder mehreren der Ansprüche 1 bis 29,
**dadurch gekennzeichnet,**
**daß** der Schlauch (6) sich mit seinem freien Ende über das diesem zugeordneten Ende des Leitungsteiles (1, 40 bis 42) hinaus erstreckt.

32. Leitungselement nach einem oder mehreren der Ansprüche 1 bis 31,
**dadurch gekennzeichnet,**
**daß** das Leitungsteile (1, 40 bis 42) eine durch einen Geflechtsschlauch (8) aus Metall gebildete, an ihm anliegende Ummantelung aufweist, und **daß** die beiden Enden der Ummantelung mit den zylindrischen Enden (4, 5) des Leitungsteiles (1, 40 bis 42) fest verbunden sind.

33. Leitungselement nach Anspruch 32,
**dadurch gekennzeichnet,**
**daß** die jeweilige Verbindung zwischen Ummantelung (8) und zylindrischen Enden (4, 5) des Leitungsteiles (1, 40 bis 42) unter Hinzufügung eines von außen spielfrei aufgesetzten und in die feste Verbindung mit einbezogenen Stützringes (9, 10) aus Metall gebildet ist.

34. Leitungselement nach Anspruch 33,
**dadurch gekennzeichnet,**
**daß** das dem gewellten Teil eines anschließenden Balges (1) zugekehrte Ende des jeweiligen Stützringes (9, 10) im wesentlichen konisch aufgeweitet (14, 15) ist.

35. Leitungselement nach einem oder mehreren der Ansprüche 1 bis 34,
**dadurch gekennzeichnet,**
**daß** zumindest die erste jeweils neben den zylindrischen Anschlußenden (4, 5) eines Balges (1) gelegene Außenkrempe (12, 13) des Balges (1) einen reduzierten Außendurchmesser aufweist, der im wesentlichen zwischen dem Außendurchmesser des übrigen gewellten Teiles des Balges (1) und dem des benachbarten zylindrischen Anschlußendes (4, 5) liegt.

36. Leitungselement nach einem oder mehreren der Ansprüche 1 bis 35,
**dadurch gekennzeichnet,**
**daß** der innere Schlauch (6) mit korrosions- und temperaturbeständigem Material beschichtet ist.

37. Leitungselement nach Anspruch 36,
**dadurch gekennzeichnet,**
**daß** das Beschichtungsmaterial Gleiteigenschaften aufweist.

38. Leitungselement nach einem oder mehreren der Ansprüche 1 bis 37,
**dadurch gekennzeichnet,**
**daß** der innere Schlauch (6) unter Hinzunahme von Glasfasern hergestellt und/oder mit einem Glasfasergeflecht überzogen ist.

39. Leitungselement nach einem oder mehreren der Ansprüche 1 bis 38,
**dadurch gekennzeichnet,**
**daß** der Schlauch (6) auf seine Außenseite mit einer Beschichtung aus korrosions- und temperaturbeständigem, wärmeisolierendem Material versehen ist.

40. Leitungselement nach einem oder mehreren der Ansprüche 1 bis 39,
**dadurch gekennzeichnet,**
**daß** es ausgehend von der festen Verbindung zwischen Leitungsteil (1, 40 bis 42) und Schlauch (6) in Richtung auf das freie Schlauchende (16) hin durchströmt ist.

## Claims

1. Duct element, especially for exhaust gas ducts and exhaust gas return ducts of internal combustion engines in motor vehicles, having a metal duct component which is provided with cylindrical connection ends and which comprises at least one helically or annularly corrugated flexible bellows (1) provided with cylindrical connection ends, and having arranged coaxially therein a flexible tube woven (6) or knitted from metal wire, wherein the duct component and the flexible tube are connected, the outer diameter of the flexible tube corresponds substantially to the free inner diameter of the duct component and, at a further location along the length of the flexible tube, the wires thereof are permanently fixed relative to one another over the periphery of the tube,
**characterised in that**
the duct component and the flexible tube are fixedly connected to one another only at one common end (4), and the flexible tube (6), as a result of an expanding force acting upon it in the sense of a radial widening, is in at least one location brought into rubbing contact with the walls of the duct component (1, 40-42) **that** form the free inner diameter of the duct component (1, 40-42).

2. Duct element according to claim 1,
**characterised in that**
the duct component has at least two bellows (40, 41) arranged axially one behind the other; neighbouring bellows (40, 41) are connected to one another by a metal intermediate tube (42); and the inner diameter of the intermediate tube (42) corresponds substantially to the free inner diameter of the adjoining bellows (40, 41).

3. Duct element according to claim 1 or 2,
**characterised in that**
prior to its installation in the duct component (1, 40-42), the flexible tube (6) is permanently deformed by axial compression to give an outer diameter greater than the free inner diameter of the duct component (1, 40-42), and, after a reduction in diameter (which is located substantially in the resilient region) to an outer diameter that corresponds to the free inner diameter, is subsequently installed in the duct component (1, 40 to 42).

4. Duct element according to one or more of claims 1 to 3,
**characterised in that**
the further location (17) where the wires are fixed relative to one another over the periphery of the flexible tube is the free end of the flexible tube.

5. Duct element according to one or more of claims 1 to 3,
**characterised in that**
the further location (18) where the wires are fixed relative to one another over the periphery of the flexible tube is arranged in the region between the ends of the flexible tube (6).

6. Duct element according to claim 5,
**characterised in that**
the further location (18) is closer to the fixed connection between the flexible tube (6) and the duct component (1, 40 to 42) than to the free end (16) of the flexible tube (6).

7. Duct element according to one or more of claims 1 to 6,
**characterised in that**
in addition to the further location (17 or 18) there is provided at least one additional location (18 or 17, respectively, 20 to 23) where the wires are fixed relative to one another over the periphery of the flexible tube (6).

8. Duct element according to one or more of claims 1 to 7,
**characterised in that**
the further location (17 or 18) and the at least one additional location (18 or 17, respectively, 20 to 23) where the wires are fixed relative to one another over the periphery of the flexible tube (6) are distributed uniformly over the free length of the flexible tube (6).

9. Duct element according to one or more of claims 1 to 8,
**characterised in that**
at least one of the further location (17 or 18) or the additional location (18 or 17, respectively, 20 to 23) where the wires are fixed relative to one another over the periphery of the flexible tube (6) has an outer diameter smaller than the free inner diameter of the duct element (1, 40 to 42).

10. Duct element according to one or more of claims 1 to 9,
**characterised in that**
the locations (17, 18, 20 to 23) where the wires are fixed relative to one another over the periphery of the flexible tube (6) are formed by welding the wires to one another.

11. Duct element according to claim 10,
**characterised in that**
the wires are connected to one another by seam welding or spot welding.

12. Duct element according to claim 11,
**characterised in that**
the welded connection is produced using the laser welding technique.

13. Duct element according to one or more of claims 1 to 12,
**characterised in that**
the expanding force that brings about the radial widening is generated by metal spring means (27 to 32) inserted into the flexible tube (6).

14. Duct element according to claim 13,
**characterised in that**
the spring means are at least one helically wound spring (27, 28) inserted into the flexible tube (6) and fixed therein in the axial direction.

15. Duct element according to claim 13,
**characterised in that**
the spring means are at least one ring-shaped spring (29 to 31) inserted into the flexible tube (6) and fixed therein in the axial direction.

16. Duct element according to claim 14 or 15,
**characterised in that**
the spring (27 to 31) is made of strip or wire material.

17. Duct element according to claim 16,
**characterised in that**
the spring (27, 29 to 31) is made of a flat strip arranged with its larger sides, as seen in cross-section, parallel to the axis (19) of the duct element.

18. Duct element according to claim 16,
**characterised in that**
the spring (28) is made of round-section wire.

19. Duct element according to claim 13,
**characterised in that**
the spring means are formed by a tubular metal sleeve (32), the outer diameter of which corresponds substantially to the free inner diameter of the duct component (1, 40 to 42), which sleeve (32) is inserted into the flexible tube (6) and corresponds in length substantially to the length of the flexible tube (6); one end (33) of the sleeve (32) is incorporated into the connection between the common ends of the duct component (1, 40 to 42) and the flexible tube (6); the sleeve (32) has slits (34), beginning next to that connection region and extending parallel to the axis (19) of the duct element, which slits (34) are distributed uniformly around the periphery of the sleeve and thus form corresponding fingers (35); and the fingers (35) exert on the flexible tube (6) the expanding force **that** brings about the radial widening thereof.

20. Duct element according to claim 19,
**characterised in that**
the slits (34) are open towards the free end of the sleeve (32).

21. Duct element according to claim 19 or 20,
**characterised in that**
the fingers (35) have over their length at least one pre-shaped bulged portion (36, 37) that is directed radially outwards.

22. Duct element according to one or more of claims 19 to 21,
**characterised in that**
at least one metal expander ring (38) is inserted into the sleeve (32) in the region of the fingers (35) and is fixed in the axial direction.

23. Duct element according to one or more of claims 19 to 22,
**characterised in that**
the expander ring (38) is seated in the region of the free end of the sleeve.

24. Duct element according to one or more of claims 1 to 23,
**characterised in that**
the flexible tube (6) is provided with local protuberances (25) produced by permanent deformation.

25. Duct element according to claim 24,
**characterised in that**
the protuberances (25) are distributed uniformly over the free length of the flexible tube (6).

26. Duct element according to one or more of claims 1 to 25,
**characterised in that**
the fixed connection between the common end of the duct component (1, 40 to 42) and the flexible tube (6) is formed with the addition of an inner supporting ring (7) inserted therein without play.

27. Duct element according to one or more of claims 19 to 26,
**characterised in that**
the supporting ring is formed by the sleeve (32) or is a component thereof.

28. Duct element according to one or more of claims 1 to 27,
**characterised in that**
at least the cylindrical connection end (4) of the duct component (1, 40 to 42) that is fixedly connected to one end of the flexible tube has a greater inner diameter than the substantial portion of the remaining length of the duct component (1, 40 to 42).

29. Duct element according to claim 28,
**characterised in that**
during the formation of the cylindrical connection end (4) by the end of a bellows (1), the first inner crimp (11) of the bellows (1) located next to the cylindrical connection end (4) has an inner diameter **that** is substantially between the inner diameter of the cylindrical connection end (4) and the free inner diameter of the bellows (1).

30. Duct element according to one or more of claims 1 to 29,
**characterised in that**
the flexible tube (6) extends over the substantial length of the duct component (1, 40 to 42), especially the corrugated bellows regions.

31. Duct element according to one or more of claims 1 to 29,
**characterised in that**
the free end of the flexible tube (6) extends beyond the associated end of the duct component (1, 40 to 42).

32. Duct element according to one or more of claims 1 to 31,
**characterised in that**
the duct component (1, 40 to 42) has, resting against it, a casing formed by a metal woven flexible tube (8), and the two ends of the casing are fixedly connected to the cylindrical ends (4, 5) of the duct component (1, 40 to 42).

33. Duct element according to claim 32,
**characterised in that**
the connection between the casing (8) and the respective cylindrical end (4, 5) of the duct component (1, 40 to 42) is formed with the addition of a metal supporting ring (9, 10) mounted, without play, from the outside and incorporated into the fixed connection.

34. Duct element according to claim 33,
**characterised in that**
the end of the respective supporting ring (9, 10) **that** faces the corrugated portion of the adjoining bellows (1) is substantially conically widened (14, 15).

35. Duct element according to one or more of claims 1 to 34,
**characterised in that**
at least the first outer crimp (12, 13) of the bellows (1) located next to the respective cylindrical connection end (4, 5) of a bellows (1) has a reduced outer diameter which is substantially between the outer diameter of the remaining corrugated portion of the bellows (1) and **that** of the neighbouring cylindrical connection end (4, 5).

36. Duct element according to one or more of claims 1 to 35,
**characterised in that**
the inner flexible tube (6) is coated with corrosion- and temperature-resistant material.

37. Duct element according to claim 36,
**characterised in that**
the coating material has sliding properties.

38. Duct element according to one or more of claims 1 to 37,
**characterised in that**
the inner flexible tube (6) is produced with the addition of glass fibres and/or is covered with a glass fibre weave.

39. Duct element according to one or more of claims 1 to 38,
**characterised in that**
the flexible tube (6) is provided on its outer side with a coating of corrosion- and temperature-resistant heat-insulating material.

40. Duct element according to one or more of claims 1 to 39,
**characterised in that**
flow passes through the duct element starting from the fixed connection between the duct component (1, 40 to 42) and the flexible tube (6) in the direction towards the free end (16) of the flexible tube.

## Revendications

1. Élément de tuyauterie, notamment pour tuyauteries d'évacuation et de recyclage des gaz d'échappement de moteurs à combustion interne de véhicules automobiles, comprenant un segment de tuyau en métal doté d'extrémités de raccordement cylindriques qui contient au moins un soufflet (1) flexible en forme de pas de vis ou ondulé qui est muni d'extrémités de raccordement cylindriques, et une gaine tressée (6) ou tricotée en fil métallique logée de manière coaxiale dans ce dernier, sachant que le segment de tuyau et la gaine sont assemblés entre eux, que le diamètre extérieur de la gaine correspond pour l'essentiel au diamètre intérieur de l'élément de tuyau et qu'en un autre point de l'étendue longitudinale de la gaine, les fils métalliques de cette dernière sont fixés à demeure les uns aux autres sur le pourtour de la gaine, **caractérisé en ce que** le segment de tuyau et la gaine ne sont assemblés entre eux qu'à une extrémité commune (4), et **en ce que** la gaine (6) est mise en contact de friction avec au moins un point des parois du segment de tuyau (1, 40-42) constituant le diamètre intérieur du segment de tuyau (1, 40-42) par une force d'écartement agissant sur elle de manière à l'étendre radialement.

2. Élément de tuyauterie selon la revendication 1, **caractérisé en ce que** le segment de tuyau présente au moins deux soufflets (40, 41) disposés axialement l'un à la suite de l'autre, **en ce que** des soufflets adjacents (40, 41) sont reliés entre eux par un tuyau intermédiaire (42) en métal, et **en ce que** le diamètre intérieur du tuyau intermédiaire (42) correspond pour l'essentiel au diamètre intérieur des soufflets adjacents (40, 41).

3. Élément de tuyauterie selon la revendication 1 ou 2, **caractérisé en ce qu'**avant d'être intégrée dans le segment de tuyau (1, 40-42), la gaine (6) est déformée de manière permanente en la comprimant axialement de façon à ce que son diamètre extérieur soit supérieur au diamètre intérieur du segment de tuyau (1, 40-42), puis est intégrée dans le segment de tuyau (1, 40-42) après que son diamètre extérieur a été réduit, pour l'essentiel dans la zone élastique, de manière à correspondre au diamètre intérieur du segment de tuyau.

4. Élément de tuyauterie selon l'une ou plusieurs des revendications 1 à 3, **caractérisé en ce que** l'autre endroit (17) où les fils métalliques sont fixés les uns aux autres sur le pourtour de la gaine est l'extrémité libre de la gaine.

5. Élément de tuyauterie selon l'une ou plusieurs des revendications 1 à 3, **caractérisé en ce que** l'autre endroit (18) où les fils métalliques sont fixés les uns aux autres sur le pourtour de la gaine est situé dans la zone entre les extrémités de la gaine (6).

6. Élément de tuyauterie selon la revendication 5, **caractérisé en ce que** l'autre endroit (18) est plus proche de l'endroit où la gaine (6) et l'élément de tuyau (1, 40 à 42) sont assemblés entre eux que de l'extrémité libre (16) de la gaine (6).

7. Élément de tuyauterie selon l'une ou plusieurs des revendications 1 à 6, **caractérisé en ce qu'**outre l'autre endroit (17 ou 18), au moins un endroit supplémentaire (respectivement 18 ou 17, 20 à 23) est prévu, où les fils métalliques sont fixés les uns aux autres sur le pourtour de la gaine (6).

8. Élément de tuyauterie selon l'une ou plusieurs des revendications 1 à 7, **caractérisé en ce que** l'autre endroit (17 ou 18) et au moins l'endroit supplémentaire (respectivement 18 ou 17, 20 à 23) où les fils métalliques sont fixés les uns aux autres sur le pourtour de la gaine (6) sont répartis de manière régulière sur la longueur de la gaine (6).

9. Élément de tuyauterie selon l'une ou plusieurs des revendications 1 à 8, **caractérisé en ce qu'**au moins l'autre endroit (17 ou 18) ou l'endroit supplémentaire (respectivement 18 ou 17, 20 à 23) où les fils métalliques sont fixés les uns aux autres sur le pourtour de la gaine (6) présente un diamètre extérieur inférieur au diamètre intérieur du segment de tuyau (1, 40 à 42).

10. Élément de tuyauterie selon l'une ou plusieurs des revendications 1 à 9, **caractérisé en ce que** les endroits (17, 18, 20 à 23) où les fils métalliques sont fixés les uns aux autres sur le pourtour de la gaine (6) sont formés en soudant les fils métalliques entre eux.

11. Élément de tuyauterie selon la revendication 10, **caractérisé en ce que** les fils métalliques sont assemblés par un soudage continu ou un soudage par points.

12. Élément de tuyauterie selon la revendication 11, **caractérisé en ce que** la soudure est réalisée en appliquant la technique de soudage au laser.

13. Élément de tuyauterie selon l'une ou plusieurs des revendications 1 à 12, **caractérisé en ce que** la force d'écartement provoquant l'extension radiale est produite par des éléments à ressort (27 à 32) logés dans la gaine (6).

14. Élément de tuyauterie selon la revendication 13, **caractérisé en ce que** les éléments à ressort sont au moins un ressort (27, 28) hélicoïdal logé dans la gaine (6) et fixé dans cette dernière dans la direction axiale.

15. Élément de tuyauterie selon la revendication 13, **caractérisé en ce que** les éléments à ressort sont au moins un ressort annulaire (29 à 31) logé dans la gaine (6) et fixé dans cette dernière dans la direction axiale.

16. Élément de tuyauterie selon la revendication 14 ou 15, **caractérisé en ce que** le ressort (27 à 31) est constitué par un matériau en ruban ou en fil.

17. Élément de tuyauterie selon la revendication 16, **caractérisé en ce que** le ressort (27, 29 à 31) est fabriqué à partir d'un ruban plat dont les plus grands côtés transversaux sont disposés parallèlement à l'axe (19) de l'élément de tuyauterie.

18. Élément de tuyauterie selon la revendication 16, **caractérisé en ce que** le ressort (28) est fabriqué à partir de fil métallique rond.

19. Élément de tuyauterie selon la revendication 13, **caractérisé en ce que** les éléments à ressort sont formés par une douille tubulaire (32) en métal logée dans la gaine (6) et essentiellement de même longueur que la gaine (6), qui a un diamètre extérieur correspondant pour l'essentiel au diamètre intérieur du segment de tuyau (1, 40 à 42), **en ce qu'**une extrémité (33) de la douille (32) est incluse dans l'assemblage des extrémités communes du segment de tuyau (1, 40 à 42) et de la gaine (6), **en ce que** la douille (32) présente des entailles (34) uniformément réparties sur son pourtour, qui commencent à côté de cette zone d'assemblage et qui sont parallèles à l'axe (19) de l'élément de tuyauterie, lesquelles délimitent des doigts (35), et **en ce que** les doigts (35) exercent sur la gaine (6) la force d'écartement provoquant son extension radiale.

20. Élément de tuyauterie selon la revendication 19, **caractérisé en ce que** les entailles (34) sont ouvertes en direction de l'extrémité libre de la douille (32).

21. Élément de tuyauterie selon la revendication 19 ou 20, **caractérisé en ce que** les doigts (35) présentent sur leur étendue longitudinale au moins une courbure (36, 37) convexe préformée.

22. Élément de tuyauterie selon l'une ou plusieurs des revendications 19 à 21, **caractérisé en ce qu'**au moins une bague d'écartement (38) en métal est logée dans la douille (32) au voisinage des doigts (35) et fixée dans la direction axiale.

23. Élément de tuyauterie selon l'une ou plusieurs des revendications 19 à 22, **caractérisé en ce que** la bague d'écartement (38) est située dans la zone de l'extrémité libre de la douille.

24. Élément de tuyauterie selon l'une ou plusieurs des revendications 1 à 23, **caractérisé en ce que** la gaine (6) est munie de bosselures (25) locales réalisées par déformation permanente.

25. Élément de tuyauterie selon la revendication 24, **caractérisé en ce que** les bosselures (25) sont uniformément réparties sur la longueur de la gaine (6).

26. Élément de tuyauterie selon l'une ou plusieurs des revendications 1 à 25, **caractérisé en ce que** la liaison fixe entre l'extrémité commune du segment de tuyau (1, 40 à 42) et la gaine (6) est réalisée en y insérant sans jeu une bague d'appui interne (7).

27. Élément de tuyauterie selon l'une ou plusieurs des revendications 19 à 26, **caractérisé en ce que** la bague d'appui est formée par la douille (32) ou est un élément constitutif de cette dernière.

28. Élément de tuyauterie selon l'une ou plusieurs des revendications 1 à 27, **caractérisé en ce qu'**au moins l'extrémité de raccordement (4) cylindrique du segment de tuyau (1, 40 à 42) qui est assemblée avec l'extrémité de la gaine présente un diamètre intérieur supérieur à la majeure partie du reste de la longueur du segment de tuyau (1, 40 à 42).

29. Élément de tuyauterie selon la revendication 28, **caractérisé en ce que**, lorsque l'on forme l'extrémité de raccordement cylindrique (4) à partir de l'extrémité d'un soufflet (1), le premier rebord intérieur (11) du soufflet (1) qui est situé à côté de l'extrémité de raccordement cylindrique (4) présente un diamètre intérieur qui se situe pour l'essentiel entre le diamètre intérieur de l'extrémité de raccordement cylindrique (4) et le diamètre intérieur du soufflet (1).

30. Élément de tuyauterie selon l'une ou plusieurs des revendications 1 à 29, **caractérisé en ce que** la gaine (6) s'étend sur l'essentiel de la longueur du segment de tuyau (1, 40 à 42), notamment sur les zones ondulées du soufflet.

31. Élément de tuyauterie selon l'une ou plusieurs des revendications 1 à 29, **caractérisé en ce que** la gaine (6) s'étend avec son extrémité libre au-delà de l'extrémité du segment de tuyau (1, 40 à 42) qui lui est associée.

32. Élément de tuyauterie selon l'une ou plusieurs des revendications 1 à 31, **caractérisé en ce que** le segment de tuyau (1, 40 à 42) présente une enveloppe formée par une gaine tressée (8) en métal et appliquée contre lui, et **en ce que** les deux extrémités de l'enveloppe sont assemblées avec les extrémités cylindriques (4, 5) du segment de tuyau (1, 40 à 42).

33. Élément de tuyauterie selon la revendication 32, **caractérisé en ce que** l'assemblage de l'enveloppe (8) et des extrémités cylindriques (4, 5) du segment de tuyau (1, 40 à 42) est réalisé en y ajoutant une bague d'appui (9, 10) en métal mise en place de l'extérieur sans jeu et incluse dans l'assemblage.

34. Élément de tuyauterie selon la revendication 33, **caractérisé en ce que** l'extrémité de la bague d'appui (9, 10) qui est tournée vers la partie ondulée d'un soufflet adjacent (1) est essentiellement élargie de façon conique (14, 15).

35. Élément de tuyauterie selon l'une ou plusieurs des revendications 1 à 34, **caractérisé en ce qu'**au moins le premier rebord extérieur (12, 13) du soufflet (1) qui est toujours adjacent aux extrémités de raccordement cylindriques (4, 5) d'un soufflet (1) présente un diamètre extérieur réduit qui se situe pour l'essentiel entre le diamètre extérieur de la partie ondulée restante du soufflet (1) et celui de l'extrémité de raccordement cylindrique (4, 5) adjacente.

36. Élément de tuyauterie selon l'une ou plusieurs des revendications 1 à 35, **caractérisé en ce que** la gaine intérieure (6) est revêtue d'une matière résistante à la corrosion et aux températures élevées.

37. Élément de tuyauterie selon la revendication 36, **caractérisé en ce que** le revêtement possède des propriétés antifriction.

38. Élément de tuyauterie selon l'une ou plusieurs des revendications 1 à 37, **caractérisé en ce que** la gaine interne (6) est fabriquée à base de fibres de verre et/ou est revêtue d'un revêtement composé de fibres de verre tressées.

39. Élément de tuyauterie selon l'une ou plusieurs des revendications 1 à 38, **caractérisé en ce que** la gaine (6) est munie sur sa face extérieure d'un revêtement en une matière calorifuge résistante à la corrosion et aux températures élevées.

40. Élément de tuyauterie selon l'une ou plusieurs des revendications 1 à 39, **caractérisé en ce qu'**il est parcouru à partir de l'assemblage du segment de tuyau (1, 40 à 42) et de la gaine (6) en direction de l'extrémité libre (16) de la gaine.
